(19) **Europäisches Patentamt**

**European Patent Office**

**Office européen des brevets**

(11) **EP 1 188 711 A1**

(12) **EUROPEAN PATENT APPLICATION**

(43) Date of publication:
**20.03.2002 Bulletin 2002/12**

(51) Int Cl.⁷: **C01B 3/04**, B01J 35/00, B01J 21/18, B01J 21/06

(21) Application number: **00810839.1**

(22) Date of filing: **15.09.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **The Hydrogen Solar Production Company Limited**<br>**London EC2A 4QS (GB)** | (72) Inventor: **Thampi, Ravindranathan K.**<br>**1024 Ecublens VD (CH)**<br><br>(74) Representative: **Hammer, Bruno, Dr.**<br>**Sunneraiweg 21**<br>**8610 Uster (CH)** |

(54) **Photocatalyst for use in the production of hydrogen from water or aqueous solutions of organic compounds**

(57) The photocatalyst for the use in the production of hydrogen from water or aqueous solutions of organic compounds by using light energy, comprises carbon, in addition to a semiconducting photocatalytic material.

The photocatalytic apparatus for the production of hydrogen from water or aqueous solutions of organic compounds by using light energy, comprises a light source, a reactor transparent for the light of the light source (2), an inlet (4) for feeding water or aqueous solution to the reactor, a gas product outlet (6), and includes a photocatalyst containing carbon, in addition to a semiconducting photocatalytic material as a photocatalyst in the reactor.

Fig. 2

**Description**

The invention is related to a catalyst according to the preamble of the independent claim 1 and to a photocatalytic apparatus according to the preamble of the independent claim 6.

For a long time, an unyielding challenge has been the development of a practical artificial photosynthetic system that can mimic the natural one. The quest is to use sunlight to drive a thermodynamically uphill reaction of an abundant material to produce a clean fuel like $H_2$.

$$H_2O \text{ (1)} \qquad \text{(h}\nu\text{, catalyst)} \rightarrow \qquad H_2 \text{ (g, 1 atm.)} + 1/2\ O_2 \text{ (g, 1 atm.)} \qquad (1)$$

The standard Gibbs free energy of reaction 1, is $\Delta G° = 237.7$ kJ/mol or 2.46 eV/molecule of water. This corresponds to 1.23 eV/e, which is also the standard emf (electromotoric force) of the reaction.

For a society urgently looking forward to implement ways of sustainable development habits, localized production of hydrogen to meet at least a part of a village's energy requirement is beneficial. Obviously, the source for hydrogen should not be an imported item or a fossil fuel. Any biologically renewable source is fine, since the evolved $CO_2$ is balanced within the photosynthetic chain and no net $CO_2$ increment in atmosphere is envisaged.

Devices making use of chemical and energy transformations driven by sunlight fall into four broad categories: (i) photobiological, (ii) photovoltaic, (iii) photoelectrochemical and (iv) photochemical methods (which also include photosynthetic and photocatalytic modes).

Water decomposition on semiconductors can be classified into the following three types:

- Vapor phase decomposition
- Liquid phase decomposition
- In a photoelectrochemical cell (PEC)

Reactions of water vapor on semiconductors like $TiO_2$ and $Fe^{3+}$ doped $TiO_2$ have been investigated and the formation of $H_2$ and $O_2$ was found to proceed very much slower than in PEC cells [G.N. Schrauzer and T.D. Guth, J. Amer. Chem. soc., 99 (1977) 3508.]. In liquid phase, water splitting can be carried out on semiconductors with liquid water alone and with liquid water mixed other organic or inorganic sacrificial donors.

For a practical system, a conversion efficiency of at least 10 % is required, implying that the hydrogen and oxygen produced have a fuel value of at least 10% of the solar energy incident on the system. As the peak solar power incident on earth is about 1 kW/m$^2$ this corresponds to a hydrogen production rate of 0.7 g/s or 7.8 L(STP)/s per m$^2$ [STP = Standard Temperature and Pressur] of collector surface at maximum solar intensity. This is difficult to be achieved by photosplitting pure water using catalysts.

In photocatalytic water cleavage systems based on aqueous dispersions of semiconductor particles (without sacrificial donors) the efficiency is generally below 1 %. In fact, water splitting can be carried out with wide band gap semiconductor powders like $SrTiO_3$ [K.R. Thampi, M. Subba Rao, W. Schwarz, M. Grätzel and J. Kiwi, J. Chem. soc., Faraday Trans. I, 84 (1988) 1703.]. These systems have the additional draw back that hydrogen and oxygen are produced simultaneously. Apart from the problem of gas separation this produces a slow down of the photoreaction as the two gases accumulate and back react with each other. A way to avoid the latter problem is to separate the hydrogen and oxygen generating half reactions as reported recently by Arakawa et al [H. Arakawa Chem. Lett. 1998.]. It is also important to have highly efficient oxygen evolution catalyst present in the semiconductor particle to liberate simultaneously stochiometric amounts of $H_2$ and $O_2$ produced by photosplitting of water [K.R. Thampi and M. Grätzel, J. Mol. Catal., 60 (1990) 31.]. Often, it is noticed that the oxygen is produced in lesser amounts than the stochiometric requirements. The missing oxygen usually is present as surface peroxides on the catalyst, causing inefficiency [K.R. Thampi, M. Subba Rao, W. Schwarz, M. Grätzel and J. Kiwi, J. Chem. soc., Faraday Trans. I, 84 (1988) 1703.].

The driving force of photocatalysis by semiconductor particles is the excess free energy of electron-hole pairs generated in the particles, by light absorption. Use of organic matter as electron donors instead of water is an interesting possibility to produce hydrogen by sunlight locally in small villages, by feeding agricultural waste products. Systems of this type are called "sacrificial" as the organic compound, for example, lactic acid (derived from milk waste), is consumed in the photoreaction. By this way agricultural waste, presently causing ecological difficulties can be usefully employed. Another substance of interest is the low grade wine or other wastes containing small amounts of alcohol and sugars. The yield of $H_2$ from such sacrificial systems is relatively high. Instead of oxygen, the main gaseous byproduct of such reactions is $CO_2$ and this gas can be easily separated from hydrogen. Compared to the reaction between oxygen and hydrogen, the reaction between hydrogen and $CO_2$ can be easily prevented when they remain mixed together as products inside the reactor.

It is the object of the present invention to create an improved photocatalyst for the use in the production of hydrogen from water or aqueous solutions of organic compounds and that provides for improved light harvesting properties. The invention further provides for an apparatus with such an improved photocatalyst. The photocatalyst according to the invention allows in selected specific embodiments the use metals like Ru and their oxides.

The photocatalyst according to the invention is characterized by the features of the characterizing part of claim 1 and the apparatus includes the features of the characterizing part of claim 6. The depending claim 2 to 5 and claims 7 and 8 respectively are related to further developments of the invention.

It is generally known that metals such as e.g. Pt, Rh, Ni exercise good $H_2$ evolution activity during the production of $H_2$. Up to the present carbon was not used as in photocatalytic processes for exercising good hydrogen evolution. With the experiments, using carbon in combination with other catalysts, photocatalytic properties comparable to these of the often used metals like e.g. Pt, Rh, Ni, were demonstrated in the production of hydrogen from water or aqueous solutions of organic compounds. By this it is possible to reduce or completely avoid the use of Pt like metals.

The invention is described in more detail by examples illustrated in the figures. They show the following:

Fig. 1    illustrates by example the result of evolved hydrogen production for various different catalyst formulations

Fig. 2    shows a schematic view of an apparatus that uses the catalyst for the production of hydrogen from water or aqueous solutions of organic compounds.

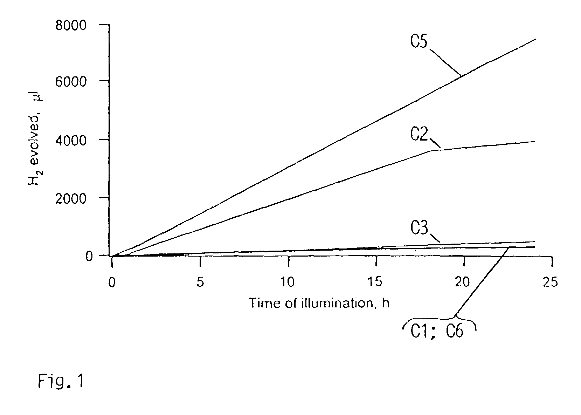

In Fig. 1 the $H_2$ evolution (production) in μl (micro liter) is plotted against time of illumination in hours with sunlight or sunlight type light. The curves in the diagram of Fig. 1 show $H_2$ evolution as a function of time, when 20 ml suspension of the photocatalysts (0.08 g) were illuminated by a solar simulator (1.5 AM sunlight) in the presence of 2% lactic acid solution. The lines C1, C2, C3, C5 and C6 (lines C1 and C6 are almost identical) indicate codes for different catalysts; they mean

C1 = pure $TiO_2$ alone;
C2 = 30% Printex-L + 70% $TiO_2$;
C3 = 30% Graphite powder + 70% $TiO_2$;
C5 = 19% Printex-L + 65% $TiO_2$ + 16% (5% $RuO_2/TiO_2$);
C6 = 70% $TiO_2$ + 30% commercial carbon powder (activated charcoal);
C1 and C6 are almost identical.

Catalyst Preparation:

The final catalyst mixture contains 3 components (called A, B & C). Each of these components is either a pure substance or a pre-prepared material which contains more than one substance.

Component A: This component is a photo-active catalyst containing ruthenium oxide or ruthenium deposited on $TiO_2$ (preferably P25, Degussa product containing approximately 80% anatase and 20% rutile phases) . This is labeled as $RuO_2/TiO_2$, hereafter for convenience. This component by itself can work as a photocatalyst for this reaction, but not efficiently. To prepare this component, two methods have been used. Method 1(impregnation):- 100 mg $RuCl_3.3H_2O$ (Ru content 38%) was dissolved in a suitable solvent (water or alcohol) and then mixed with 1g $TiO_2$. The amount of solvent was adjusted to make the mixture a slurry. The slurry after mixing was dried at 110 °C and subsequently heated at 500 °C for 1 hour. The resulting solid mass was ground to obtain a powder. Instead of $RuCl_3$, other salts and inorganic complexes of Ru may also be used to obtain the same kind of catalyst.

Method 2(deposition-precipitation): The procedure for deposition is as follows [K.R. Thampi, J. Kiwi and M. Graetzel, Nature, 327 (1987) 506.; US patent 4'847'231]: 100mg $RuCl_3.3H_2O$ (Ru content 38%) was dissolved in 100 ml 0.1 HCl and the solution left to equilibrate for 1 day. $TiO_2$ (1 g) was added and the pH slowly raised to 4.5 by means of a 0.1 KOH solution. The temperature of the dispersion was raised to 60 °C and maintained over a period of 5 hours during which the pH was repeatedly readjusted to 4.5. Water was subsequently evaporated by heating the dispersion in an open dish until it boiled and the solid was calcined for 20h at 170 °C and 12-18 h at 375 °C. Residual KCl was removed from the catalyst by dialysis which was carried out over a period of two to four days. Subsequently, the sample was dried overnight at 110 °C. This procedure yields $RuO_2$ particles of 10 - 20 A size, deposited on $TiO_2$.

Component B:

This is $TiO_2$ (preferably P25, Degussa product containing approximately 80% anatase and 20% rutile phases).

Component C:

This is a commercially available carbon black pigment (also known as furnace black). The product we have used is called Printex-L and Printex - G made by Degussa-Huels AG. Similar carbon black from other suppliers (for example, E-Tek, USA) is also sufficient.

Final Catalyst:

Components A, B and C are mixed together and ground thoroughly using an agate mortar and pestle for several hours. The following ratio worked well during experiments.

(1) 1g $TiO_2$ (P25) + 50 to 300 mg Printex-L + 250 mg (5% $RuO_2$/95%$TiO_2$) catalyst.
(2) 1g $TiO_2$ (P25) + 50 to 300 mg Printex-L + 100 mg (5% $RuO_2$/ 95%$TiO_2$) catalyst.
(3) 1g $TiO_2$ (P25) + 50 to 300 mg Printex-G + 200 mg (5% $RuO_2$/ 95%$TiO_2$) catalyst.

Experimental Run:

For each experiment 80 mg of the final catalyst was used. This was dispersed in a solution containing 19ml water and 1 ml lactic acid (40% solution in water; Fluka make) in a pyrex reaction vessel equipped with septum for withdrawing gas samples using a gas syringe for analysis. The mixture is then stirred using a magnetic stirrer. It was then purged using either $N_2$ or Ar gas for 3-5 minutes for removing air from the head space in the reactor. This step is not essential. The reactor is then exposed to simulated sunlight (50mW/$cm^2$), using a Suntest Xenon lamp. The lamp spectrum is similar to that of the sunlight falling on the surface of the earth.

In another experiment, 0.05g catalyst (C 4 not shown in Fig. 1), containing 19% Printex-G + 65% $TiO_2$ + 16% (5% $RuO_2$/$TiO_2$), is illuminated with a solution containing 10ml water and 0.2 ml white wine containing 13% alcohol (equivalent to 26 microlitres of ethanol). In about 25 hours, 1.25 ml hydrogen gas was collected. This demonstrates that suspended photocatalyst particles may be employed to produce solar hydrogen from waste derived organic compounds. Though these experiments were preliminary in nature, it showed a significant potential for large scale field applications.

An active photocatalyst designed to produce $H_2$ from water or aqueous solutions of organic compounds (including those derived from agro-industrial wastes such as dairy waste), using light energy. The said catalyst is prepared by using $TiO_2$ as the main light harvesting material. In addition to $TiO_2$, the catalyst contains a mixture of ruthenium oxide supported on $TiO_2$ and various grades of commercial carbon black powders (for example, carbon marketed as Printex (trade name) or any other commercial material similar to the quality of Printex. 100 parts of the final catalyst consists of an intimately mixed material, containing 1 to 30 parts of carbon powder, 1 to 25 parts of a powder obtained by depositing 0.05% to 25% ruthenium oxide over $TiO_2$ (prepared separately) and the remaining amount is balanced by various light harvesting materials such as $TiO_2$, ZnO, $SrTiO_3$, $BaTiO_3$, $WO_3$, CdS, CdSe, $Fe_2O_3$, ZnS.

To sensitize the catalyst's spectral range to more visible region, the $TiO_2$ and such other light harvesting semiconducting material may be doped using other ions like for example, Nb, Fe, In, Ga, Li, P, Si, B.

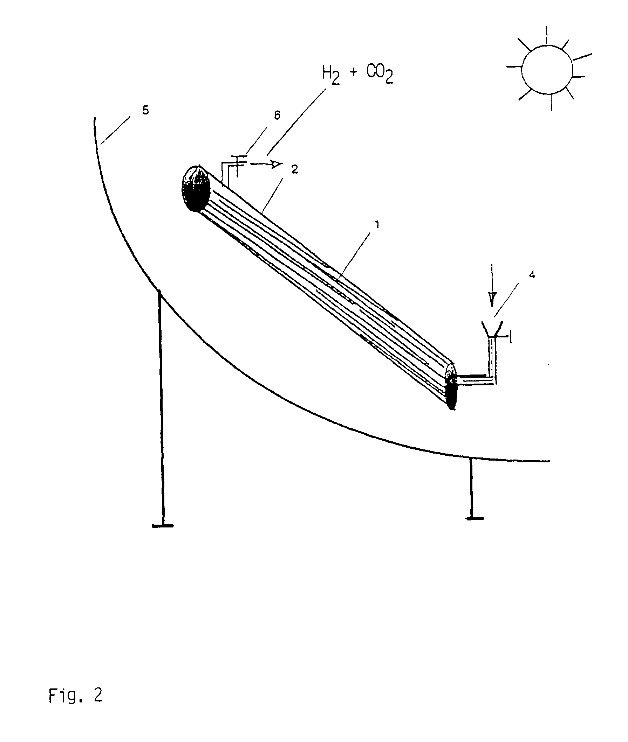

The apparatus of Fig 2 includes reactor 2 made of a light transparent material, preferably e.g. glass or quartz. Aqueous solution 1 of the organic compound (sacrificial donor) and the photocatalyst is fed by the liquid feed inlet 3 into the reactor 2. The photocatalyst may be in suspension and/or may be deposited in an immobilized layer on a transparent substrate, that is placed inside the reactor 2. The inside of the reactor 2 is may also be coated with catalyst. In the given example sunlight is directed into the reactor 2 onto the photocatalyst. The mirror, e.g. a parabolic mirror increases the light (sunlight or light from another light source) directed onto the photocatalyst and consequently increases the harvest of the process. The product of the process is released from the reactor by the gas product outlet 6. As the product of the process basically is $H_2$ and $CO_2$ the product is led to a $CO_2$ absorber, where the $CO_2$ is separated from the hydrogen.

The photocatalyst for the use in the production of hydrogen from water or aqueous solutions of organic compounds by using light energy, comprises carbon, in addition to a semiconducting photocatalytic material.

The Photocatalytic apparatus for the production of hydrogen from water or aqueous solutions of organic compounds by using light energy, comprises a light source, a reactor transparent for the light of the light source, an inlet for feeding water or aqueous solution to the reactor, a gas product outlet, and includes a photocatalyst containing carbon, in addition to a semiconducting photocatalytic material as a photocatalyst in the reactor.

**Claims**

1. Photocatalyst for the use in the production of hydrogen from water or aqueous solutions of organic compounds by using light energy, **characterized by** comprising carbon, in addition to a semiconducting photocatalytic material.

2. Photocatalyst according to claim 1, comprising
one or more of the metals or oxides of the metals, selected from Pt, Ir, Rh, Pd, Os, Ru, Ag, Ni or a combination of two or more of them,
deposited on semiconducting light harvesting material selected from $TiO_2$, ZnO, $SrTiO_3$, $BaTiO_3$, $WO_3$, CdS, CdSe, $Fe_2O_3$, ZnS or a combination of two or more of them.

3. Photocatalyst according to claim 1 or 2, the photocatalyst further including a light harvesting semiconducting material with no deposit on it, selected from $TiO_2$, ZnO, $SrTiO_3$, $BaTiO_3$, $WO_3$, CdS, CdSe, $Fe_2O_3$, ZnS, or a combination of two or more of them.

4. Photocatalyst according to any of claims 1 to 3, the light harvesting semiconducting material being doped with elements selected from Nb, Fe, In, Ga, Li, P, Si, B or a combination of two or more of these elements

5. Photocatalyst according to claims 4 and claim 1, consisting of
1 part of $TiO_2$
0.005 to 1 parts of carbon
and
0.05 to 1 parts of $RuO_2/TiO_2$ ($RuO_2$ deposited on $TiO_2$) the $RuO_2$ being 0.05% to 25% by weight of the total of the $RuO_2$ and $TiO_2$.

6. Photocatalytic apparatus for the production of hydrogen from water or aqueous solutions of organic compounds by using light energy, comprising a light source, a reactor transparent for the light of the light source,
an inlet for feeding water or aqueous solution to the reactor, and
a gas product outlet,
**characterized by** a photocatalyst according to any of claims 1 to 5 as the photocatalyst in the reactor.

7. Photocatalytic apparatus according to claim 6, photocatalyst being in suspension in the liquid, and/or photocatalyst being placed on one or more substrates, and/or the photocatalyst being placed on the inside wall of the reactor.

8. Photocatalytic apparatus according to claim 6 or 7, the light source being the sun, or a lamp with a spectrum similar to sunlight.

Fig. 1

$H_2 + CO_2$

Fig. 2

**European Patent Office**

**EUROPEAN SEARCH REPORT**

Application Number

EP 00 81 0839

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KAWAI, TOMOJI ET AL: "Hydrogen evolution from water using solid carbon and light energy" NATURE (LONDON) (1979), 282(5736), 283-4 , 1979, XP002159226 * the whole document * | 1-8 | C01B3/04 B01J35/00 B01J21/18 B01J21/06 |
| X | KAWAI, TOMOJI ET AL: "Production of hydrogen and carbon monoxide from liquid water and carbon using solar energy" J. CHEM. SOC., CHEM. COMMUN. (1979), (23), 1047-8 , 1979, XP002159227 * the whole document * | 1-8 | |
| X | EP 0 882 504 A (DAIKEN CHEMICAL COMPANY ;KOMATSU TERUO (JP)) 9 December 1998 (1998-12-09) * page 16 * | 1-3 | |
| X | DATABASE CHEMABS 'Online! CHEMICAL ABSTRACTS SERVICE, COLUMBUS, OHIO, US; SLATTERY, D. K. ET AL: "Photocatalytic H2 evolution over semiconductor particles deposited on conductive substrates" retrieved from STN Database accession no. 126:119935 CA XP002159228 * abstract * & HYDROGEN ENERGY PROG. XI, PROC. WORLD HYDROGEN ENERGY CONF., 11TH (1996), VOLUME 3, 2551-2557. EDITOR(S): VEZIROGLU, T. NEJAT. PUBLISHER: INTERNATIONAL ASSOCIATION FOR HYDROGEN ENERGY, CORAL GABLES, FLA. , 1996, | 1 | TECHNICAL FIELDS SEARCHED (Int.Cl.7) C01B B01J |

—/—

The present search report has been drawn up for all claims

| Place of search | Date of completion of the search | Examiner |
|---|---|---|
| THE HAGUE | 2 February 2001 | Van der Poel, W |

**EP 1 188 711 A1**

**European Patent Office**

# EUROPEAN SEARCH REPORT

Application Number

EP 00 81 0839

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 370 263 A (VISCA MARIO) 25 January 1983 (1983-01-25) * claims * | 1-8 | |
| A | "CHEMICAL ABSTRACTS + INDEXES,US,AMERICAN CHEMICAL SOCIETY. COLUMBUS" CHEMICAL ABSTRACTS + INDEXES,US,AMERICAN CHEMICAL SOCIETY. COLUMBUS, XP000317719 ISSN: 0009-2258 * abstract * | 1-3,6-8 | |
| A | PATENT ABSTRACTS OF JAPAN vol. 018, no. 482 (C-1247), 8 September 1994 (1994-09-08) & JP 06 157002 A (SUMITOMO ELECTRIC IND LTD;OTHERS: 01), 3 June 1994 (1994-06-03) * abstract * | 6-8 | |
| A | ASHOKKUMAR M: "An overview on semiconductor particulate systems for photoproduction of hydrogen" INTERNATIONAL JOURNAL OF HYDROGEN ENERGY,GB,ELSEVIER SCIENCE PUBLISHERS B.V., BARKING, vol. 23, no. 6, 1 June 1998 (1998-06-01), pages 427-438, XP004109676 ISSN: 0360-3199 * the whole document * | 1-3 | TECHNICAL FIELDS SEARCHED (Int.Cl.7) |

The present search report has been drawn up for all claims

| Place of search | Date of completion of the search | Examiner |
|---|---|---|
| THE HAGUE | 2 February 2001 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

## ANNEX TO THE EUROPEAN SEARCH REPORT
## ON EUROPEAN PATENT APPLICATION NO.

EP 00 81 0839

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2001

| Patent document cited in search report | | Publication date | Patent family member(s) | | Publication date |
|---|---|---|---|---|---|
| EP 0882504 | A | 09-12-1998 | JP | 10146531 A | 02-06-1998 |
| | | | JP | 11047611 A | 23-02-1999 |
| | | | US | 6121191 A | 19-09-2000 |
| | | | WO | 9811984 A | 26-03-1998 |
| US 4370263 | A | 25-01-1983 | IT | 1131867 B | 25-06-1986 |
| | | | IT | 1134199 B | 31-07-1986 |
| | | | AU | 538485 B | 16-08-1984 |
| | | | AU | 7219281 A | 07-01-1982 |
| | | | BR | 8104129 A | 16-03-1982 |
| | | | CA | 1150230 A | 19-07-1983 |
| | | | DE | 3166454 D | 08-11-1984 |
| | | | EP | 0043251 A | 06-01-1982 |
| | | | IL | 63186 A | 29-06-1984 |
| | | | IN | 154163 A | 29-09-1984 |
| | | | JP | 3039737 B | 14-06-1991 |
| | | | JP | 57045345 A | 15-03-1982 |
| | | | SU | 1083897 A | 30-03-1984 |
| JP 06157002 | A | 03-06-1994 | NONE | | |

EPO FORM P0459

For more details about this annex : see Official Journal of the European Patent Office, No. 12/82